# EUROPEAN PATENT APPLICATION

(11) **EP 1 176 483 A2**
(43) Date of publication of application: **30.01.2002**
(21) Application number: 01118358.9
(22) Date of filing: 27.07.2001
(51) Int. Cl.: G05B 19/042

(54) **Automatic electronic device and method for controlling such an electronic device**

(30) Priority: 27.07.2000 JP 2000226287
(71) Applicant: YAMAHA HATSUDOKI KABUSHIKI KAISHA, Iwata-shi Shizuoka-ken (JP)
(72) Inventor: Yoshida, Makoto, Iwata-Shi, Shizuoka-ken (JP)
(74) Representative: Grünecker, Kinkeldey, Stockmair & Schwanhäusser Anwaltssozietät

(57) **Abstract**

Electronic equipment with an autonomous function and a method for controlling an electronic equipment with an autonomous function controllable in accordance with a basic configuration, wherein said basic configuration is changed by external factors, said electronic equipment comprises a basic configuration information storage means storing information on a plurality of basic configurations beforehand; basic configuration information selection means selecting a specific basic configuration from a plurality of basic configurations stored in said basic configuration information storage means; and initial value setting means setting the selected basic configuration as an initial value.

## Description

This invention relates to electronic equipment with an autonomous function and to a method for controlling an electronic equipment with an autonomous function

There has been known a pet robot, for example, as electronic equipment that has an autonomous function described above. The pet robot is a system in which it informs the owner (a user of the pet robot) of its condition such as the degree of hunger or fatigue through various movements to request for food or the like and its character is shaped on the basis of the owner's response at that time. Thus the character is basic configuration of the electronic equipment which is changeable by external factors.

As a result of the pet robot being raised to have a character to his preference, the owner is able to play with the pet robot with the character to his preference.

In the pet robot described above, it generally has no specific character in the initial condition just after purchasing so that the user may enjoy the process through which the character of the pet robot will be shaped, therefore the user must wait till the pet robot has had a desired character, which might cause the user to become weary of the pet robot in the mean time.

Such a problem is not limited to the case of the pet robot, but it is found, for example, in an electronic pet device or other electronic equipment with an autonomous function as well.

It is an objective of the present invention to provide electronic equipment with an autonomous function and to a method for controlling an electronic equipment with an autonomous function, wherein a desired basic configuration can be raised easily.

According to the apparatus aspect of the present invention, said objective is solved by an electronic equipment with an autonomous function according to claim 1.

According to the method aspect of the present invention, said objective is solved by a method for controlling an electronic equipment with an autonomous function according to claim 6.

Preferred embodiments of the present invention are laid down in the respective dependent claims.

In view of the embodiment of a pet-robot or the like, the basic configuration which represents a character is adapted to be changed by external factors such as user attitude to the equipment and the surroundings, and particularly to electronic equipment with an autonomous function adapted to be raised easily to have a desired character.

In the following, the present invention is explained in greater detail with respect to several embodiments thereof in conjunction with the accompanying drawings, wherein:
- Fig. 1: is a schematic block diagram showing the outline of one embodiment of a pet robot; and
- Fig. 2: is a block diagram showing the outline of processing in the embodiment.

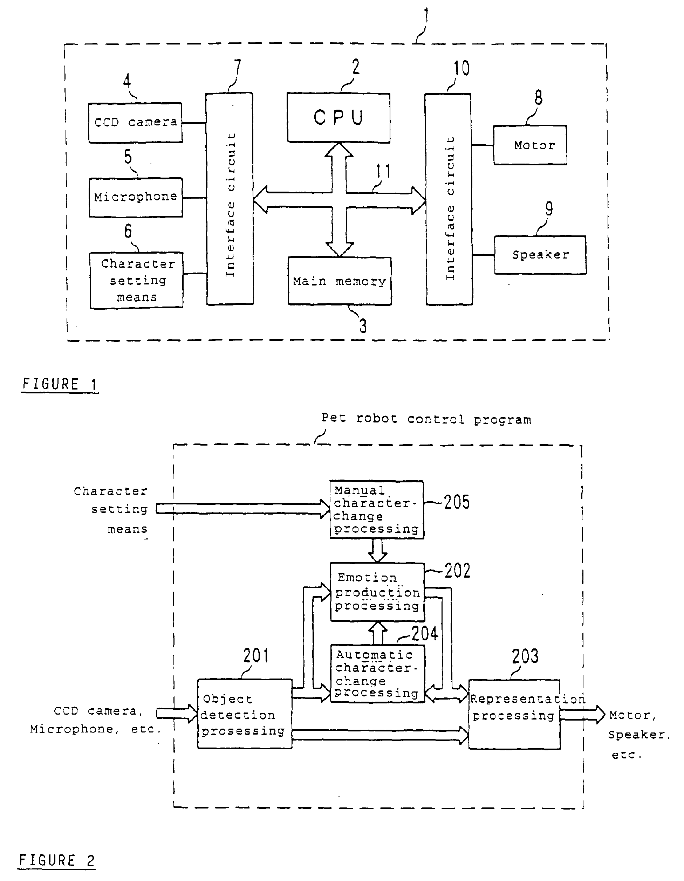

Fig. 1 is a schematic block diagram of one embodiment of the electronic equipment with an autonomous function which is a pet robot.

In general, the electronic equipment with an autonomous function according to this embodiment has a basic configuration which represents a character of the pet-robot, and a character information selection means 6 is provided for selecting a desired character from a plurality of characters stored in said basic configuration information storage means 3 by a user, as described in detail later.

As shown in Fig. 1, the pet robot 1 of this embodiment is comprised of a CPU 2; a main memory 3 for storing a program such as an OS, or other requisite information; an interface circuit 7 for input devices such as an externally provided CCD camera 4, a microphone 5, and character setting means 6 by which a user is able to set the character of the pet robot 1; and interface circuit 10 for output devices such as a motor 8 and a speaker 9; and a system bus 11 for connecting, as appropriate, the CPU 2, the main memory 3 and the interface circuits 7, 10.

The character setting means 6 (basic configuration information selection means) may be provided, for example, with switches corresponding to characters which can be set in the pet robot 1, or with only a connection terminal adapted to be connected by a special terminal through which the character of the pet robot 1 can be set. If only a connection terminal is provided, said special terminal needs only be connected to the connection terminal only when the character of the pet robot 1 is set by a user, thereby providing size reduction of the pet robot 1.

The user of the pet robot 1 starts a pet robot control program stored in a given region, so that the program is executed on the CPU 2.

The pet robot control program, as shown in Fig. 2, comprises object detection processing 201 for detecting user movements or surroundings; emotion production processing 202 for producing an emotion based on the detection result of the object detection processing 201; representation processing 203 for selecting a movement to be performed, referring to an emotion produced by the emotion production processing 202, and for producing a control signal based on the detection result of the information detection processing 201; automatic character-change processing 204 for automatically changing formulas used for producing emotions in the emotion production processing 202, based on the output of the object detection processing 201 and the emotion production processing 202; manual character-change processing 205 for changing formulas used for producing emotions in the emotion production processing 202.

The object detection processing 201 is adapted to detect several kinds of information on movements and voices performed and uttered by a user for care for the pet robot, surrounding objects, the ambient temperature, etc, from signals inputted from the CCD camera 4, the microphone 5 and several kinds of sensors (for example, temperature sensors).

The emotion production processing 202 is adapted to produce emotions of the pet robot 1 based on the detection result of the object detection processing 201 using formulas for calculating parameters expressing emotions. The emotion of the pet robot 1 (a condition of the electronic equipment) includes, for example, "anger," "sadness," "pleasure," "fear," "surprise," "dislike," etc, and the kind of emotion the robot has at present is expressed by the magnitude of the parameters corresponding to the respective emotions.

The representation processing 203 is adapted to select an movement referring to parameters expressing emotions calculated in the emotion production processing 202, to produce a control signal for the selected movement, based on the detection result of the object detection processing 201, and to output the produced control signal to a motor 8 for driving member components corresponding to hands, legs, body and head, or to a speaker 9, that is, for example, to rotate a given motor 8, or to output cries or the like from the speaker 9.

The movement of the pet robot 1 includes, for example, "bite," "bark," "run," "cry," "sleep," etc, and these movements are specified by the lower and upper limits of the respective parameters representing the movements. For example, the movement of "bite" is determined when a parameter representing "anger" has a value of 90-100 and a parameter representing "sadness" a value of 0-20.

The automatic character-change processing 204 is adapted to read a given value stored beforehand in the main memory 3, based on the output of the object detection processing 201 and the emotion production processing 202, and to change a formula automatically such that the calculation result of a parameter expressing an emotion is multiplied by the given value. For example, if a value of a parameter expressing "anger" is constantly great because of frequent scoldings by the user, the formula used for producing an emotion is changed such that the calculation result of a parameter expressing "anger" is multiplied by a given value larger than 1, to increase the value of the parameter to thereby change the character of the pet robot 1 to a "hot-tempered character." On the contrary, if the value of a parameter expressing "anger" is constantly small because of frequent praises by the user, the formula used for producing an emotion is changed such that the calculation result of a parameter expressing "anger" is multiplied by a given value smaller than 1, to decrease the value of the parameter to thereby change the character of the pet robot 1 to a "good-tempered character."

The manual character-change processing 205 is adapted to read a given value stored in the main memory 3 beforehand, based on the setting of the character setting means 6 by the user, and to change a formula such that the calculation result of a parameter expressing an emotion is multiplied by the given value. For example, if the character setting means 6 is set to a "hot-tempered character," the formula used for producing an emotion is changed such that the calculation result of a parameter expressing "anger" is multiplied by a given value larger than 1, to increase the value of the parameter to thereby change the character of the pet robot 1 to a "hot-tempered character." On the contrary, if the setting switch 6 is set to a "good- tempered character," the formula used for producing an emotion is changed such that the calculation result of a parameter expressing "anger" is multiplied by a given value smaller than 1, to decrease the value of the parameter to thereby change the character of the pet robot 1 to a "good-tempered character."

Thus, as a result of the manual character-change processing 205 being provided, a user is able to set a character, for example, in the initial condition just after purchasing, so that the user is able to play, from the beginning, with the pet robot 1 with a character nearly to the user preference. Therefore, the user might become less weary of the pet robot by the time it has had a desired character, and the pet robot 1 can be raised easily to have the desired character.

In addition, if a plurality of characters are set simultaneously in the character setting means 6, given values corresponding to the set characters are read individually from the main memory 3, and formulas used for producing emotions are changed such that the calculation results of parameters representing emotions are multiplied separately by the given values, so that the pet robot 1 is allowed to have a character which is a combination of a plurality of set characters.

As described above, in the manual character-change processing 205, the character of the pet robot 1 can be changed to a character which is a combination of a plurality of characters, thereby providing finer response to the user preference.

In this embodiment, the main memory 3 corresponds to character information storage means, the character setting means 6 corresponds to character information selection means, and the manual character-change processing 205 corresponds to initial value setting means.

The foregoing embodiment has been exemplified by electronic equipment with an autonomous function, but it is not intended to limit the production method of emotions, the setting method of characters, or the like.

For example, although an example has been shown in which electronic equipment with an autonomous function is incorporated in a pet robot, this invention is not limited to a pet robot, but may be applied to electronic pet devices such as raising simulation game machines, or the like.

In addition, part or all of the memory 3 may be adapted to be rewritten to change the given value corresponding to the character. For example, there may by provided a connection terminal connectable to a communication line, such as the internet, to which is connected a server or the like storing a plurality of pieces of character information, and if the communication line is connected to the connection terminal, part or all of the information on the plurality of characters currently stored in the main memory 3 may be adapted to be rewritten referring to the character information stored in the server and supplied through the communication line.

As described above, since the electronic equipment with an autonomous function according to the embodiment is provided with initial value setting means, a user is able to set a character, for example, in the initial condition just after purchasing, so that the user is able to be in contact with the electronic equipment with an autonomous function having a character nearly to the user preference from the beginning. Thus, the user might become less weary of the equipment by the time it has had the desired character, and the electronic equipment with an autonomous function can be raised easily to have a desired character.

The embodiment described above provides an electronic equipment with an autonomous function whose character is adapted to be changed by external factors, wherein it comprises character information storage means for storing information on a plurality of characters beforehand; character information selection means for allowing a user to select a desired character from among characters stored in said character information storage means; and initial value setting means for setting the character selected by said user as an initial value.

Therefore, since a user is able to set a character, for example, in the initial condition just after purchasing, the user is able to be in contact with the electronic equipment with an autonomous function having a character nearly to the user preference from the beginning. Thus, the user might become less weary of the equipment by the time it has had the desired character, so that the electronic equipment with an autonomous function can be raised easily to have a desired character.

Said character information selection means is adapted to allow said user to select a plurality of characters, and if said user selects a plurality of characters, said initial value setting means is adapted to set initial values based on the plurality of characters.

Since in the electronic equipment with an autonomous function, a user is able to select a plurality of characters through character information selection means, combination of the plurality of characters allows the user to have many choices, which provides fine response to the user preference.

Said character information storage means is capable of rewriting part or all of the information on said plurality of characters stored.

Since, part or all of the plurality of stored characters can be rewritten, the number of characters which can be set by a user in the initial condition is increased and the user is able to have more choices, which provides finer response to the user preference.

In the electronic equipment with an autonomous function, there is provided a connection terminal connectable to a communication line, and if said communication line is connected to said connection terminal, said character information storage means is capable of rewriting part or all of the currently stored information on said plurality of characters, referring to the information on characters supplied through said communication line.

Since, the currently stored information on characters can be rewritten referring to the information of characters supplied through a communication line, a user is able to change easily a character which can be set by the user in the initial condition, reducing time and labor required for the user to rewrite the information on the characters.

The embodiment described above teaches an electronic equipment with an autonomous function controllable in accordance with a basic configuration, wherein said basic configuration is changeable by external factors. Said electronic equipment 1 comprises a basic configuration information storage means 3 for storing information on a plurality of basic configurations beforehand, basic configuration information selection means 6 for selecting a specific basic configuration from a plurality of basic configurations stored in said basic configuration information storage means 3, and initial value setting means 205 for setting the selected basic configuration as an initial value.

Said basic configuration information selection means 6 is provided for selecting a plurality of basic configurations, wherein said initial value setting means 205 is provided for setting initial values based on the plurality of basic configurations.

Said basic configuration information storage means 3 is capable of rewriting part or all of the information on said plurality of basic configurations stored.

The electronic equipment with an autonomous function according to the embodiment further comprises a connection terminal connectable to a communication line. Said character information storage means 3 is capable of rewriting part or all of currently stored information on said plurality of basic configuration, referring to the information on basic configurations supplied through said communication line if said communication line is connected to said connection terminal.

According to the electronic equipment with an autonomous function being a pet-robot, said basic configuration represents a character of the pet-robot, and the character information selection means 6 is provided for selecting a desired character from a plurality of characters stored in said basic configuration information storage means 3 by a user.

From the description of the above-mentioned embodiment, a method for controlling an electronic equipment with an autonomous function controllable in accordance with a basic configuration can be taken. Said basic configuration is changeable by external factors and said method comprises the steps of: storing information on a plurality of basic configurations beforehand; selecting a specific basic configuration from a plurality of basic configurations stored; and setting the selected basic configuration as an initial value.

Said method for controlling an electronic equipment with an autonomous function further comprises selecting a plurality of basic configurations, and setting said initial values based on the plurality of basic configurations.

Said method for controlling an electronic equipment further comprises rewriting part or all of the information on said plurality of basic configurations stored.

Within said method for controlling an electronic equipment a connection terminal is connectable to a communication line, and rewriting part or all of currently stored information on said plurality of basic configuration, referring to the information on basic configurations supplied through said communication line if said communication line is connected to said connection terminal.

Within said method for controlling an electronic equipment said basic configuration represents a character of the electronic equipment 1, especially a pet-robot, and a desired character is selected from a plurality of characters stored by a user.

## Claims

1. Electronic equipment with an autonomous function controllable in accordance with a basic configuration, wherein said basic configuration is changeable by external factors, said electronic equipment (1) comprises a basic configuration information storage means (3) for storing information on a plurality of basic configurations beforehand; basic configuration information selection means (6) for selecting a specific basic configuration from a plurality of basic configurations stored in said basic configuration information storage means (3); and initial value setting means (205) for setting the selected basic configuration as an initial value.

2. Electronic equipment with an autonomous function according to claim 1, **characterized in that** said basic configuration information selection means (6) is provided for selecting a plurality of basic configurations, wherein said initial value setting means (205) is provided for setting initial values based on the plurality of basic configurations.

3. Electronic equipment with an autonomous function according to claim 1 or 2, **characterized in that** said basic configuration information storage means (3) is capable of rewriting part or all of the information on said plurality of basic configurations stored.

4. Electronic equipment with an autonomous function according to at least one of the claims 1 to 3, **characterized by** a connection terminal connectable to a communication line, said character information storage means (3) is capable of rewriting part or all of currently stored information on said plurality of basic configuration, referring to the information on basic configurations supplied through said communication line if said communication line is connected to said connection terminal.

5. Electronic equipment with an autonomous function according to at least one of the claims 1 to 4, **characterized in that** said basic configuration represents a character of the electronic equipment (1), especially a pet-robot, and the character information selection means (6) is provided for selecting a desired character from a plurality of characters stored in said basic configuration information storage means (3) by a user.

6. Method for controlling an electronic equipment with an autonomous function controllable in accordance with a basic configuration, wherein said basic configuration is changeable by external factors, said method comprises the steps of:
storing information on a plurality of basic configurations beforehand; selecting a specific basic configuration from a plurality of basic configurations stored; and
setting the selected basic configuration as an initial value.

7. Method for controlling an electronic equipment with an autonomous function according to claim 6, **characterized by** selecting a plurality of basic configurations, and setting said initial values based on the plurality of basic configurations.

8. Method for controlling an electronic equipment with an autonomous function according to claim 6 or 7, **characterized by** rewriting part or all of the information on said plurality of basic configurations stored.

9. Method for controlling an electronic equipment with an autonomous function according to at least one of the claims 6 to 8, **characterized by** a connection terminal connectable to a communication line, and rewriting part or all of currently stored information on said plurality of basic configuration, referring to the information on basic configurations supplied through said communication line if said communication line is connected to said connection terminal.

10. Method for controlling an electronic equipment with an autonomous function according to at least one of the claims 6 to 9, **characterized in that** said basic configuration represents a character of the electronic equipment (1), especially a pet-robot, and a desired character is selected from a plurality of characters stored by a user.
